# EUROPEAN PATENT APPLICATION

(11) **EP 2 215 990 A2**
(43) Date of publication of application: **11.08.2010**
(21) Application number: 10152407.2
(22) Date of filing: 02.02.2010
(51) Int. Cl.: A61C 8/00

(54) **Implant for fixing dental prostheses**

(30) Priority: 09.02.2009 IT PD20090009 U
(71) Applicant: Crudo, Vincenzo, 36075 Montecchio Maggiore VI (IT)
(72) Inventor: Crudo, Vincenzo, 36075 Montecchio Maggiore VI (IT)
(74) Representative: Modiano, Micaela Nadia

(57) **Abstract**

An implant (10) for fixing dental prostheses of the type comprising
- an externally threaded intra-bone section (11),
- an anchoring superstructure (15) for a prosthesis,
- a pin (20) for fixing the anchoring superstructure (15) to the intra-bone section (11).

The external thread (12) of the intra-bone section (11) has at least two first self-tapping longitudinal grooves (22) and at least two second longitudinal grooves (23) which prevent unscrewing.

## Description

The present invention relates to an implant for fixing dental prostheses.

Implants for fixing dental prostheses are currently known and appreciated for their biomechanical characteristics, which implants consist of
- an intra-bone section, with an external thread, which is adapted to be screwed into the bony part of the gum, and to which section is fixed
- an anchoring superstructure for a prosthesis; such superstructure is provided by an abutment with an axial through hole and a lower rotation-preventing mating collar with a corresponding complementarily shaped seat formed at the top end of such intra-bone section,
- a pin for fixing the anchoring superstructure to the intra-bone section, designed to be inserted in the axial through hole of the anchoring superstructure and to be screwed into a corresponding threaded dead hole formed axially on the bottom of the seat for the rotation-preventing collar of the abutment, in such intra-bone section.
   The intra-bone section has such a pitch and profile as to allow easy screwing and at the same time quick penetration of the bone between the threads.
   Such an implant, despite being appreciated and widespread, has aspects that can be improved.
   The portion with an external thread of the intra-bone section has, at the top free end, known as the apex, radial holes for discharging bone pressure, which pressure is caused by the fact that the site into which the intra-bone section is to be screwed is of course smaller than the intra-bone section itself.
   The apex of the intra-bone section also has, for the same purpose, an axial frustum-shaped hollow.
   Such holes and such hollow, while being useful, provide a limited reduction of bone compression of the site and do not facilitate the screwing of the intra-bone section.
   Moreover, upon screwing the intra-bone section in the corresponding site, pockets of liquids and accumulations of debris might remain trapped between the threads or form in place at the end of such screwing operation and might cause tension, provide a place where bacteria could live and grow, cause inflammation and other similar or related inconveniences for the patient.
   Further, due to the way threads are typically provided, they still allow for the possibility that some unscrewing might take place during the various steps of osteointegration, such unscrewing causing a final position of the implant which is incorrect, i.e., defective.
   In addition to these drawbacks, there is often the drawback related to the difficulty of screwing the intra-bone section into the implantation site, which is smaller than such intra-bone section.
   The aim of the present invention is to provide an implant that makes it possible to obviate the cited drawbacks of known types of implants.
   Within this aim, an object of the invention is to provide an implant for fixing dental prostheses that limits or prevents entirely the formation of accumulations of debris or liquids within the implantation site when the intra-bone section has been screwed into it.
   Another object of the invention is to provide an implant for fixing prostheses which has a higher primary stability than the ones that are known.
   Another object of the invention is to provide an implant that is easier to screw in than known implants.
   Another object of the invention is to provide an implant whose mechanical, biocompatibility and technical properties in general are not inferior to those of known types of implants.
   Another object of the invention is to propose an implant for fixing dental prostheses that can be manufactured with known technologies and systems and at low cost.
   This aim, as well as these and other objects which will become better apparent hereinafter, are achieved by an implant for fixing dental prostheses of the type comprising
- an intra-bone section, with an external thread, which is adapted to be screwed into the bony part of the gum, to which section is fixed
- an anchoring superstructure for a prosthesis, which is formed by an abutment with an axial through hole and a lower collar for rotation-preventing mating with a corresponding complementarily shaped seat formed at the top end of said intra-bone section,
- a pin for fixing said anchoring superstructure to the intra-bone section, designed to be inserted in the axial through hole of the anchoring superstructure and to be screwed into a corresponding threaded dead hole that is formed axially, on the bottom of the seat for the rotation-preventing collar of the abutment, in said intra-bone section,
said implant being **characterized in that** said external thread of said intra-bone section has at least two first longitudinal grooves which prevent unscrewing and two second self-tapping longitudinal grooves, said first and second grooves extending from the apex of the intra-bone section to the transgingival collar.

Further characteristics and advantages of the invention will become better apparent from the following detailed description of a preferred but not exclusive embodiment of the implant for fixing dental prostheses according to the invention, illustrated by way of non-limiting example in the accompanying drawings, wherein:
Figure 1 is an exploded perspective view of an implant according to the invention;
Figure 2 is a sectional side view of the implant according to the invention, implanted in a gum;
Figure 3 is a sectional side view of the intra-bone section of the implant according to the invention;
Figure 4 is a transverse sectional view indicated by the sectional line IV-IV in Figure 3;
Figure 5 is a transverse sectional view, indicated by the sectional line V-V in Figure 3.

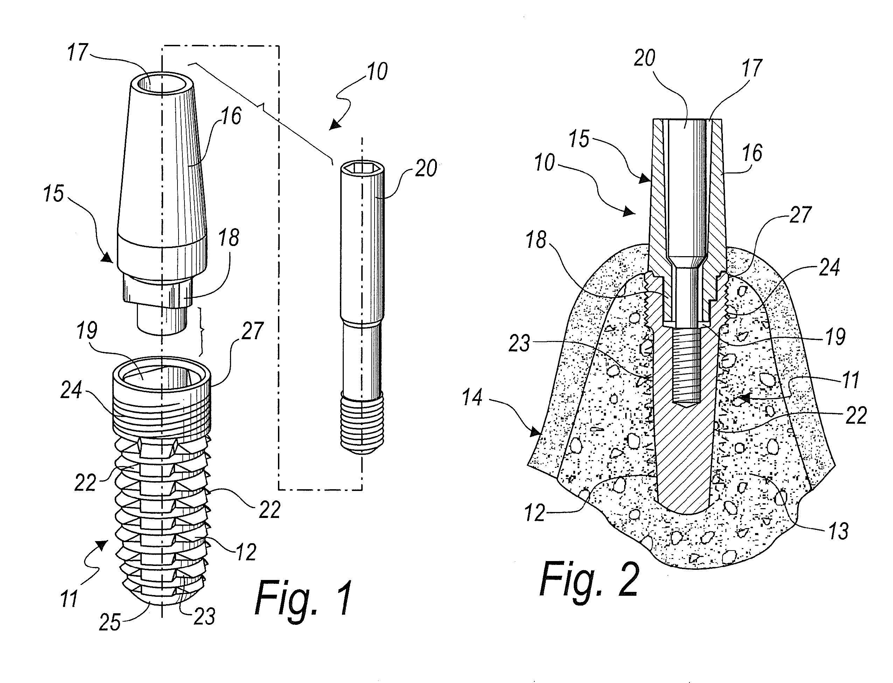

With reference to the figures, an implant for fixing dental prostheses according to the invention is shown in exploded view in Figure 1 and is designated by the reference numeral 10 therein.

The implant 10 comprises
- an intra-bone section 11, with an external thread 12; the intra-bone section 11 is adapted to be screwed into the bony part 13 of a gum 14; the following is adapted to be fixed to the intra-bone section 11:
- an anchoring superstructure 15 for a prosthesis; the superstructure 15 is formed by an abutment 16 with an axial through hole 17 and a lower collar 18 for rotation-preventing mating with a corresponding complementarily shaped seat 19 formed at the top end of the intra-bone section 11;
- a pin 20 for fixing the anchoring superstructure 15 to the intra-bone section 11, designed to be inserted in the axial through hole 17 of the anchoring superstructure 15 and to be screwed into a corresponding threaded dead hole 21 formed axially on the bottom of the seat 19 for the rotation-preventing collar 18 of the abutment 16 in the intra-bone section 11.

The external thread 12 of the intra-bone section 11 has three first self-tapping longitudinal grooves 22 and three second longitudinal grooves 23 which prevent unscrewing.

The first advantage of these grooves, both the first ones 22 and the second ones 23, and in particular the second ones 23, is that their presence provides an increase in available osteointegrating surface.

The first self-tapping grooves 22 are contoured and designed to facilitate the screwing of the intra-bone section 11, removing material from the previously provided hole of the implantation site, where generally the operator is required, if he encounters resistance in screwing, to perform unscrewing and proceed with a new screwing action.

The second grooves 23 which prevent unscrewing are contoured and designed to prevent unscrewing during the various steps of osteointegration.

The grooves 22 and 23 are provided by milling.

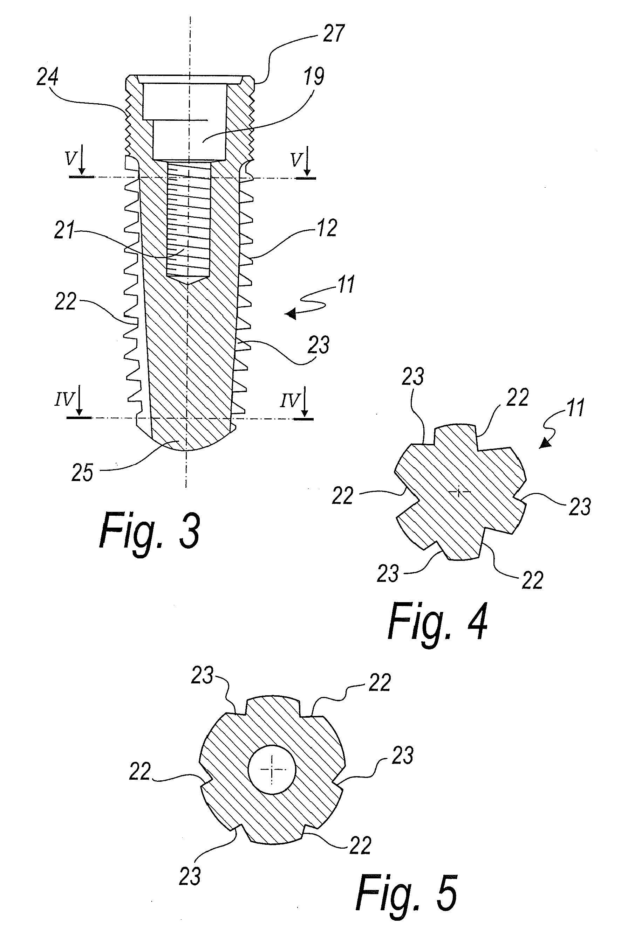

In the constructive example of the invention described here by way of non-limiting description of the invention, the grooves 22 and 23 have a profile which has a substantially triangular transverse cross-section, as can be seen in the transverse cross-sections shown in Figures 4 and 5, but it must be understood that the cross-section can have any shape, as long as it is compatible with the intended aim and objects.

The first self-tapping grooves 22 are deeper in a radial direction as one proceeds from the transgingival collar 24 toward the apex 25, because the tapping work must be more effective at the first threads that penetrate into the bone.

The second grooves 23 which prevent unscrewing are designed to allow better penetration of the gingival bone that is regenerating, improving osteointegration and primary stability.

The grooves 22 and 23 allow, in addition to better osteointegration, a greater decompression of the site and accordingly a better oxygenation of the part, since the bone has more space, determined by the grooves, to expand and decompress, with consequently better diffusion of oxygen in the walls of the site.

Further, the grooves 22 and 23 allow the discharge of liquids (for example blood) and any debris which during screwing, or with the preceding operations for providing the implantation site, accumulate between the threads or on the bottom of the site, as can occur with similar known types of implants.

As screwing proceeds, in fact, the liquid and solid residues that the external thread 12 encounters can rise to the transgingival collar 24 without stopping on the bottom of the implantation site, a region where they typically cause excessive tensions or infections or other disorders and inconveniences.

The first grooves 22 extend from the apex of the intra-bone section 25 to the transgingival collar 24, in a direction which is substantially parallel to the axis of symmetry of the intra-bone section 11.

Likewise, the second grooves 23 also extend from the apex 25 of the intra-bone section 11 to the transgingival collar 24 and in a substantially axial direction.

The upper end portion of the lateral surface 27 of the transgingival collar 24 is smooth.

The smooth portion 27 acts as a biological seal, i.e., as a plug designed to prevent the infiltration of germs and bacteria into the implantation site.

The number of grooves 22 and 23 varies depending on the diameter of the intra-bone section 11.

The grooves 22 and 23 can be two for each type, in the case of a first series of smaller diameters, up to five per type, in the case of a second series of larger diameters.

In practice it has been found that the invention achieves the intended aim and objects.

In particular, the invention provides an implant for fixing dental prostheses which, by means of the longitudinal grooves 22 and 23, prevents the accumulation of debris or liquids on the bottom of the implantation site when the intra-bone section 11 is screwed into it.

Further, the invention provides an implant for fixing prostheses which has a higher primary stability than known similar implants due to such grooves and in particular due to the grooves preventing unscrewing, which allow the bone that is decompressing and regenerating to penetrate into the longitudinal grooves, improving osteointegration and increasing primary stability significantly with respect to known types of implants.

With the first self-tapping grooves 22, the invention provides an implant that is easier to screw in than known implants.

Moreover, the invention provides an implant whose mechanical, technical and biocompatibility properties in general are not inferior to those of known types of implants.

Moreover, the invention provides an implant for fixing dental prostheses that can be manufactured with known systems and technologies and at low cost.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Utility Model Application No. PD2009U000009 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An implant (10) for fixing dental prostheses of the type comprising
- an intra-bone section (11), with an external thread (12), adapted to be screwed into the bony part (13) of a gum (14), to which section (11) is adapted to be fixed
- an anchoring superstructure (15) for a prosthesis, which is formed by an abutment (16) with an axial through hole (17) and a lower collar (18) for rotation-preventing mating with a corresponding complementarily shaped seat (19) formed at the top end of said intra-bone section (11),
- a pin (20) for fixing said anchoring superstructure (15) to the intra-bone section (11), designed to be inserted in the axial through hole (17) of the anchoring superstructure (15) and to be screwed into a corresponding threaded dead hole (21) that is formed axially, on the bottom of the seat (19) for the rotation-preventing collar (18) of the abutment (16), in said intra-bone section (11),
said implant (10) being **characterized in that** said external thread (12) of said intra-bone section (11) has at least two first self-tapping longitudinal grooves (22) and at least two second longitudinal grooves (23) which prevent unscrewing, said first and second grooves extending from the apex (25) of the intra-bone section (11) to the transgingival collar (24).

2. The implant according to claim 1, **characterized in that** said first self-tapping grooves (22) are deeper in a radial direction as one proceeds from the transgingival collar (24) toward the apex (25).

3. The implant according to one or more of the preceding claims, **characterized in that** said grooves (22, 23) have a profile with a substantially triangular transverse cross-section.

4. The implant according to one or more of the preceding claims, **characterized in that** an upper end portion of a lateral surface (27) of said transgingival collar (24) is smooth, said smooth lateral portion (27) acting as a biological seal, i.e., as a plug designed to prevent the infiltration of germs and bacteria in the implantation site.
